# EUROPEAN PATENT APPLICATION

(11) **EP 4 391 392 A1**
(43) Date of publication of application: **26.06.2024**
(21) Application number: 23218893.8
(22) Date of filing: 20.12.2023
(51) Int. Cl.: H04B 1/00, H04B 1/40, H04W 88/08

(54) **DIGITAL CIRCUIT FOR MULTIPLE ANTENNA REMOTE RADIO HEAD AND RADIO UNIT**

(30) Priority: 22.12.2022 TW 111149325
(71) Applicant: Ranictek Inc., Taipei City (TW)
(72) Inventor: WANG, Yi-Fan, Taipei City (TW)
(74) Representative: Cabinet Chaillot

(57) **Abstract**

A digital circuit consists of a plurality of digital circuits for multiple RRHs and RUs. For the digital circuit of the RRH (1000), it has at least one programmable digital circuit (410) or fixed digital circuit (420) which includes a CPRI module (1011). The other programmable digital circuit(s) (510) and/or fixed digital circuit(s) (520) include(s) one or more ADC (431) and DAC (427) module(s). For the digital circuit of the RU, it has at least one programmable digital circuit (410) or fixed digital circuit (420) including a fronthaul interface module (411). The other programmable digital circuit(s) (610) or fixed digital circuit(s) (620) include(s) one or more communication signal processing module(s). The digital circuit can be used in Massive MIMO base stations such that the required transmit power can be reduced as a green technology.

## Description

### 1. Field of the Invention

The present invention relates to a digital circuit, in particular to a digital circuit for multiple antenna remote radio head and radio unit.

### 2. Description of the Prior Arts

In wireless communication applications such as base stations, a radio remote head (RRH) or radio unit (RU) is used to perform the radio frequency (RF) analog signal processing and digital signal processing by a RF analog circuit and a digital circuit, respectively. Due to the common use of multiple antenna technology in current base stations or ground stations in satellite communications, the RF analog circuit comprises multiple RF components and RF integrated circuits (RFICs), or is integrated into a single RFIC, such that each antenna path corresponding to a RF chain comprising of the required RF signal processing. However, for the digital circuit, existing technologies commonly utilize a single-chip architecture. For instance, a digital circuit used in the RRH was disclosed in the World Intellectual Property Organization (WIPO) patent No. WO2015188145A1 on December 10, 2015, employing a system-on-a-chip (SOC) structure based on a single chip, utilizing an integrated circuit (IC) as an example of its digital circuit implementation.

Since the mainstream technology uses the single-chip architecture, the digital circuit can be implemented by either a fixed digital circuit, such as application specific integrated circuit (ASIC), or a programable digital circuit, such as field programable gate array (FPGA), SOC, micro-controller (MCU), micro-processor unit (MPU), digital signal processor (DSP), graphics processing unit (GPU), central processing unit (CPU), etc. However, if a programmable digital circuit is used, although it is programmable for future modification and update, its circuit performance such as power consumption and computational speed is easily inferior to that of the ASIC. If a fixed digital circuit is used, because the digital circuit is unprogrammable, it lacks the flexibility of the future modification and update. Especially, in the application of base stations, telecom operators usually expect the base station having a long lifetime, such as more than 10 years. Hence, the digital circuit may need to be modified or updated during the lifetime because of the update of the wireless communication standard, i.e., 3rd Generation Partnership Project (3GPP) specifications.

Furthermore, due to the single-chip architecture of the digital circuit, when any part of the chip is damaged, it may cause the whole chip to fail, also causing the entire system to fail. Also, to repair the damaged chip, the entire chip must be replaced.

Moreover, since the single-chip digital circuit need to integrate all functions on one chip, the whole circuit structure is complex. Typically, only a few big IC design companies can provide single-chip solutions, and hence the circuit cost is likely to be high.

Based on the above, the mainstream single-chip digital circuit still has shortcomings such as lack of flexibility, short lifetime, low reliability, maintenance difficulty, and high cost, which still need to be solved.

To solve the above-mentioned shortcomings of the mainstream technology, the digital circuit of the present disclosure adopts a multi-chip structure. The whole digital circuit has multiple (sub) digital circuits, which correspond to multiple chips. Each digital circuit can be implemented by a programmable digital circuit or a fixed digital circuit. By appropriately assigning the digital signal processing functions into the chips of the programmable digital circuit(s) and/or fixed digital circuit(s), all digital circuits can work together to achieve the required functions.

According to one aspect of the disclosure, a digital circuit for a RU is provided. The digital circuit comprises: a single or plurality of programable digital circuit(s); and a single or plurality of fixed digital circuit(s), wherein at least one programable digital circuit or fixed digital circuit has a fronthaul interface module, and the other programable digital circuit(s) and/or fixed digital circuit(s) have/has a single or plurality of communication signal processing module(s). The communication signal processing module comprises at least one or a combination of the following modules: inverse fast Fourier transform (IFFT), cyclic prefix (CP) addition, crest factor reduction (CFR), digital pre-distortion (DPD), digital up converter (DUC), digital to analog converter (DAC), analog to digital converter (ADC), digital down converter (DDC), CP removal, fast Fourier transform (FFT), physical random access channel (PRACH) filtering processing, automatic gain control (AGC), in-phase and quadrature (IQ) data compression and decompression, antenna calibration, and orthogonal frequency division multiplexing (OFDM) phase compensation.

According to another aspect of the disclosure, a digital circuit for a RU is provided. The digital circuit comprises: a plurality of programable digital circuits, wherein at least one programable digital circuit has a fronthaul interface module, and the other programable digital circuit(s) has/have a single or plurality of communication signal processing module(s). The communication signal processing module comprises at least one or a combination of the following modules: IFFT, CP addition, CFR, DPD, DUC, DAC, ADC, DDC, CP removal, FFT, PRACH filtering processing, AGC, IQ data compression and decompression, antenna calibration, and OFDM phase compensation.

According to another aspect of the disclosure, a digital circuit for a RU is provided. The digital circuit comprises: a plurality of fixed digital circuits, wherein at least one fixed digital circuit has a fronthaul interface module, and the other fixed digital circuit(s) has/have a single or plurality of communication signal processing module(s). The communication signal processing module comprises at least one or a combination of the following modules: IFFT, CP addition, CFR, DPD, DUC, DAC, ADC, DDC, CP removal, FFT, PRACH filtering processing, AGC, IQ data compression and decompression, antenna calibration, and OFDM phase compensation.

According to another aspect of the disclosure, a digital circuit for a RRH is provided. The digital circuit comprises: a single or plurality of programable digital circuit(s); and a single or plurality of fixed digital circuit(s), wherein at least one programable digital circuit or fixed digital circuit has a common public radio interface (CPRI) module, and the other programable digital circuit(s) and/or fixed digital circuit(s) have/has a single or plurality of DAC and ADC module(s).

According to the disclosure, the digital circuits for the RRH and RU not only have flexibility for future modification and update but also superior circuit performance, such as lower power consumption and faster computational speed. Employing a multi-chip architecture also enhances reliability and lifetime compared to a single-chip architecture. For instance, in the applications of multiple antenna RU, even if certain digital circuit chips corresponding to some antenna paths are damaged, this might lead to a reduction in performance, but the entire system could still operate sufficiently, extending its reliability and lifetime. Moreover, for repairment, only the damaged chips need to be replaced, rather than replacing all chips, making repairment easier. Furthermore, the circuit complexity in individual chips is reduced by the multi-chip architecture because it lowers the development threshold, preventing being solely provided by a few major companies, potentially reducing the overall circuit cost. Additionally, the digital circuit described in this disclosure is particularly suitable for wireless communication systems with larger number of antennas, such as Massive MIMO base stations. In such base stations, as the number of antennas increases, given the same data transmission rates, the required transmit power is inversely reduced to the antenna numbers. This means that, with a proper design, as the number of antennas grows, the required transmit power decreases, enabling a reduction in the base station's power consumption, thereby achieving energy-saving as a green technology.

### IN THE DRAWINGS

FIG 1 depicts an illustration of a base station with a RRH.
FIG 2 depicts an illustration of a base station with RUs.
FIG 3 depicts an illustration of ground stations with a RU in satellite communications.
FIG 4 depicts one exemplary embodiment of a digital circuit for a RU.
FIG 5 depicts another exemplary embodiment of a digital circuit for a RU.
FIG 6 depicts another exemplary embodiment of a digital circuit for a RU.
FIG 7 depicts another exemplary embodiment of a digital circuit for a RU.
FIG 8 depicts another exemplary embodiment of a digital circuit for a RU.
FIG 9 depicts another exemplary embodiment of a digital circuit for a RU.
FIG 10 depicts one exemplary embodiment of a digital circuit for a RRH.
FIG 11 depicts one exemplary embodiment of a digital circuit for a RU in satellite communications.

The following description is provided in conjunction with the accompanying drawings to illustrate specific embodiments, but these embodiments are not intended to limit the scope of the present disclosure. Any device resulting from the rearrangement of components to achieve equivalent functionality is within the scope of this disclosure. Furthermore, the drawings are for illustrative purposes and are not drawn to scale. For ease of understanding, identical components will be denoted by the same symbols in the following description.

Regarding the term "programmable digital circuit" used in this disclosure, its defined scope encompasses any digital circuit that can be modified or updated using programming languages. For instance, FPGA, SOC, MCU, MPU, DSP, GPU, CPU, any combinations of the aforementioned, and any other digital circuits that can be modified or updated using programming languages fall within the scope of the definition of "programmable digital circuit" in this disclosure.

Regarding the term "fixed digital circuit" used in this disclosure, its defined scope encompasses any digital circuit that cannot be modified or updated using programming languages. For example, ASIC and any other digital circuits that cannot be modified or updated using programming languages fall within the scope of the definition of "fixed digital circuit" in this disclosure.

The term "bidirectional transmission" used in this disclosure refers to the ability for signal or data transmission between A and B in both directions. Specifically, if A transmits signals or data bidirectionally to B, it means that A can send signals or data to B and/or B can send signals or data to A.

The term "Radio Unit (RU)" used in this disclosure refers to a broad category of RUs, encompassing systems containing antennas, RF analog circuits, and digital circuits. For instance, systems defined by the Open Radio Access Network (O-RAN) alliance as open radio units (O-RUs) fall within the scope of the definition of a RU in this disclosure. Other combinations such as systems comprising O-RUs along with open distributed units (O-DUs), and systems like ground stations in satellite communications, containing antennas, RF analog circuits, and digital circuits, are also within the defined scope of a RU in this disclosure.

The term "Distributed Unit (DU)" used in this disclosure refers to a broad category of DUs, encompassing systems connected to a RU via an interface and having a digital circuit containing operations related to the physical layer (PHY) processing. For example, systems defined by the O-RAN alliance as O-DUs fall within the defined scope of a DU in this disclosure. Other combinations, such as systems comprising O-DUs along with open central units (O-CUs), and systems involving the backend of ground stations in satellite communications, containing operations related to the PHY processing, are also within the defined scope of a DU in this disclosure.

The term "fronthaul interface" used in this disclosure refers to a broad category of interfaces connecting the RU and the DU. For instance, the fronthaul interface defined by the O-RAN alliance employing the evolved common public radio interface (eCPRI) protocol, encompassing control plane (C-Plane), user plane (U-Plane), synchronization plane (S-Plane), and management plane (M-Plane), falls within the scope of the definition of a fronthaul interface in this disclosure. Interfaces connecting the frontend RU and the backend DU at ground stations in satellite communications also fall within the defined scope of a fronthaul interface in this disclosure.

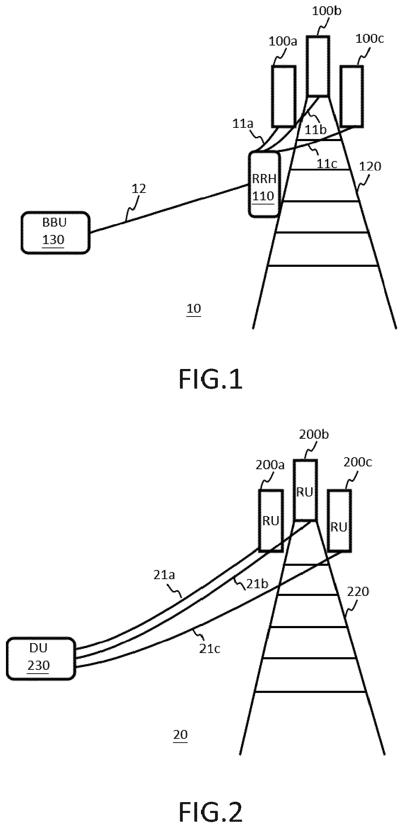

FIG 1 depicts an illustration of a base station with a RRH. As shown in Figure 1, base station 10 includes antennas 100a to 100c, RRH 110, support frame 120, baseband unit (BBU) 130, cables 11a to 11c, and common public radio interface (CPRI) 12.

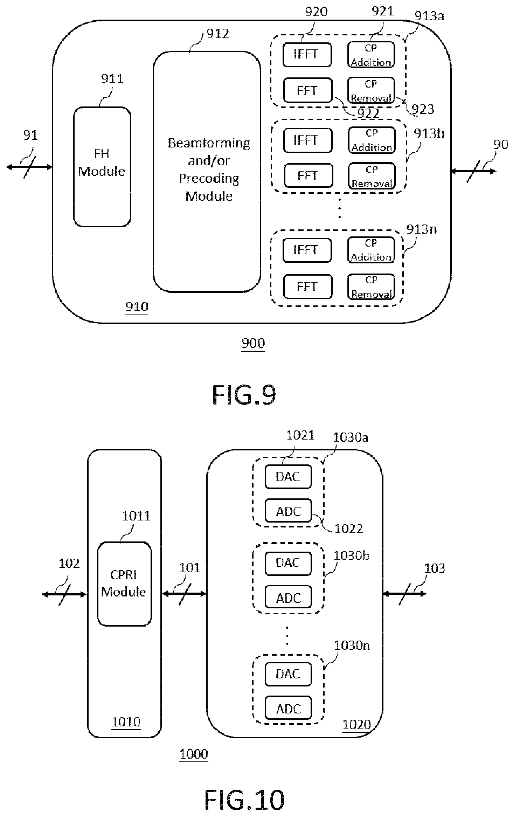

Support frame 120 primarily serves as a support, with antennas 100a to 100c and RRH 110 installed on it. Antennas 100a to 100c are used to receive and transmit wireless radio signal waves and transmit analog high-frequency signals bidirectionally to RRH 110 through cables 11a to 11c. RRH 110 contains RF analog circuits and digital circuits. The RF analog circuits mainly perform analog signal processing, including up conversion and down conversion, filtering, amplification, and attenuation of the analog signals. The digital circuits, a core part of this disclosure, primarily perform digital signal processing operations. In FIG 10, it provides an explanation of an implementation example of digital circuits for a RRH. RRH 110 transmits digital data bidirectionally to BBU 130 via CPRI 12. BBU 130 executes baseband functionalities required by the base station, including the physical layer (PHY), media access control (MAC), radio link control (RLC), packet data convergence protocol (PDCP), and radio resource control (RRC).

FIG 2 depicts an illustration of a base station with a RU. Unlike the RRH in FIG 1, RUs 200a to 200c integrate antennas, RF analog circuits, and digital circuits together, reducing or eliminating cable losses associated with RRHs. Furthermore, due to the integration of the RU with antennas, it is more suitable for applications with large number of antennas, such as Massive MIMO. Therefore, fifth-generation (5G) mobile communications often utilize base stations with RUs. As shown in FIG 2, base station 20 includes RUs 200a to 200c, support frame 220, DU 230, and fronthaul interfaces 21a to 21c.

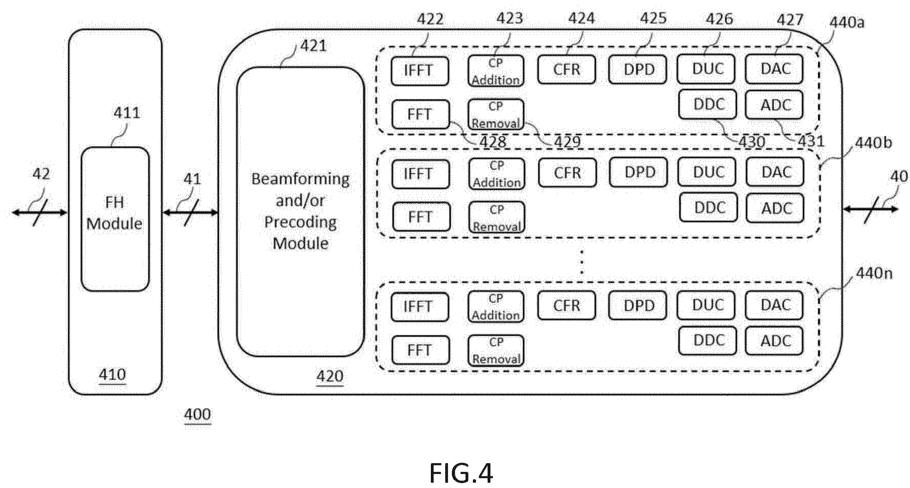

Support frame 220 primarily serves as a support and houses RUs 200a to 200c, each of which contains antennas, RF analog circuits, and digital circuits. The antennas are used to receive and transmit wireless radio signal waves. The RF analog circuits mainly perform tasks such as up conversion and down conversion, filtering, amplification, and attenuation of analog signals. The core of this disclosure lies in the digital circuits, primarily performing operations for digital signal processing. From FIG 4 to FIG 9, it provides an explanation of implementation examples of digital circuits for RUs. RUs 200a to 200c transmit digital data bidirectionally to DU 230 through fronthaul interfaces 21a to 21c. DU 230 executes functionalities required by the base station, including high physical layer (High-PHY), media access control (MAC), and radio link control (RLC).

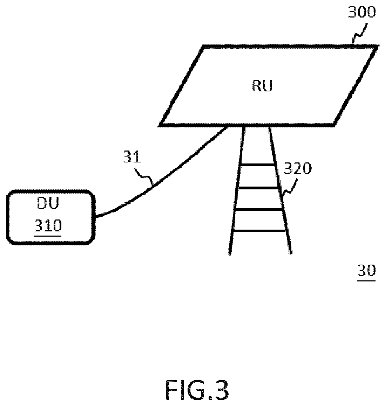

FIG 3 depicts an illustration of a ground station with a RU in satellite communications. As depicted in FIG 3, ground station 30 comprises RU 300, support frame 320, DU 310, and fronthaul interface 31.

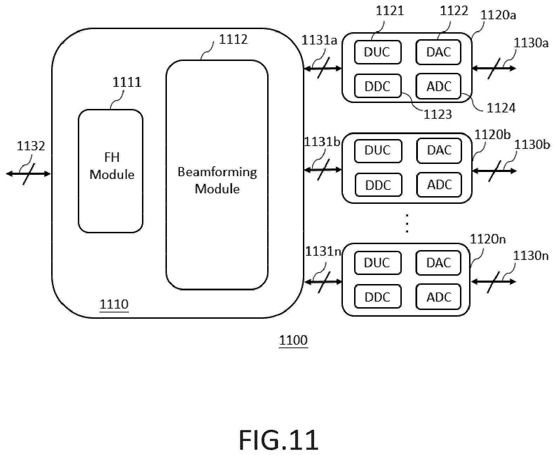

Support frame 320 primarily serves as a support and houses RU 300, which includes antennas, RF analog circuits, and digital circuits. The antennas are used for receiving and transmitting wireless radio signal waves. The RF analog circuits primarily perform tasks such as up conversion and down conversion, filtering, amplification, and attenuation of analog signals. The core of this disclosure lies in the digital circuits, primarily performing operations for digital signal processing. In FIG 11, it provides an explanation of an implementation example of digital circuits for a RU at a ground station in satellite communications. RU 300 transmits digital data bidirectionally to DU 310 via fronthaul interface 31. DU 310 can execute operations related to the PHY processing required for the ground station in satellite communications.

FIG 4 illustrates a block diagram of a digital circuit for a RU according to an embodiment disclosed herein. As shown in FIG 4, digital circuit 400 includes programmable digital circuit 410, fixed digital circuit 420, analog interface 40, digital interface 41, and fronthaul interface 42.

Programmable digital circuit 410 includes fronthaul interface (FH) module 411, where fronthaul interface module 411 serves as a transmitter and receiver of fronthaul interface 42. It transmits data from the RU through fronthaul interface 42 to the DU and receives data from the DU through fronthaul interface 42 to the RU.

Fixed digital circuit 420 includes beamforming and/or precoding module 421 and multiple communication signal processing modules 440a to 440n.

Beamforming and/or precoding module 421 comprises two parts. Beamforming mainly performs uplink and downlink beamforming operations, while precoding calculates signals required for transmission by each antenna in the downlink.

Each of communication signal processing modules 440a to 440n contains transmission and reception parts, where the transmission part includes IFFT 422, CP addition 423, CFR 424, DPD 425, DUC 426, and DAC 427. Initially, the frequency-domain signals undergo IFFT 422 and CP addition 423 for OFDM modulation, converting frequency-domain signals into time-domain signals. Subsequently, CFR 424 limits the signal magnitude within a preset dynamic range, DPD 425 compensates for non-linear distortion caused by the power amplifier in the RF analog circuit, and finally, DUC 426 increases the signal sampling frequency and/or shifts to radio frequency, and DAC 427 converts digital signals into analog signals before sending to the RF analog circuit from the RU.

Each of communication signal processing modules 440a to 440n, in its reception part, includes ADC 431, DDC 430, CP removal 429, and FFT 428. Initially, the analog signals from the RF analog circuit are converted into digital signals by ADC 431, followed by DDC 430 for reducing the signal sampling frequency and/or shifting to baseband frequency. Finally, CP removal 429 and FFT 428 are performed for OFDM demodulation, converting time-domain signals into frequency-domain signals.

Programmable digital circuit 410 and/or fixed digital circuit 420 may also include the following modules: PRACH filtering processing, AGC, OFDM phase compensation, antenna calibration, and IQ data compression and decompression. The PRACH filtering processing mainly involves filtering of the PRACH signals; AGC is used to achieve automatic gain adjustment; OFDM phase compensation provides compensation for the phase of OFDM signals; antenna calibration is used to align the gains of the antennas and RF circuits between the transmitting and receiving ends; IQ data compression and decompression are used to reduce the data required for transmission and reception in the fronthaul interface. To simplify the illustration in FIG 4, these modules are not depicted, but they can also be included within digital circuit 400.

As shown in FIG 4, programmable digital circuit 410 and fixed digital circuit 420 can bidirectionally transmit data through digital interface 41. Digital interface 41 can be implemented by interfaces such as JESD204 (A/B/C), low-voltage differential signaling (LVDS), peripheral component interconnect express (PCIe), or other interfaces. Analog interface 40 serves as an interface for bidirectional transmission of analog signals between the RF analog circuit and fixed digital circuit 420.

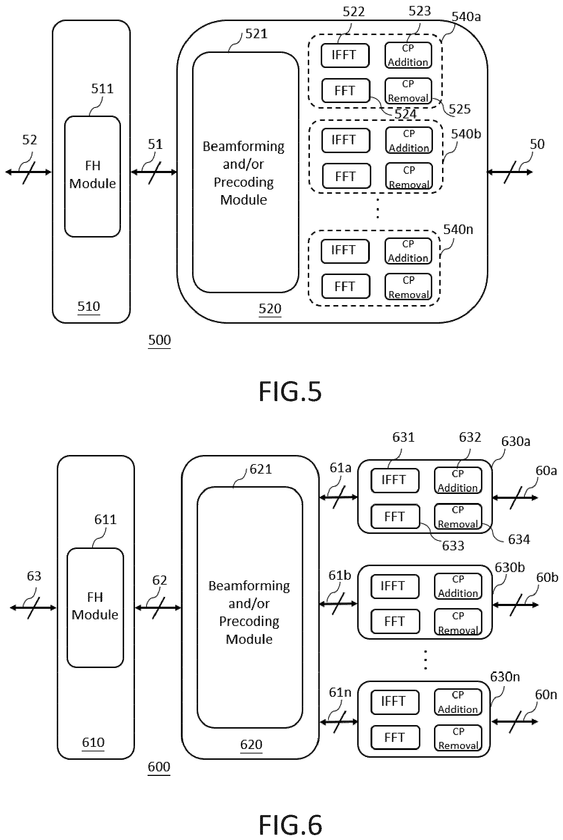

FIG 5 illustrates a block diagram of a digital circuit for a RU according to an embodiment disclosed herein. As shown in FIG 5, digital circuit 500 comprises programmable digital circuit 510, fixed digital circuit 520, digital interface 50, digital interface 51, and fronthaul interface 52.

Programmable digital circuit 510 includes fronthaul interface module 511, wherein fronthaul interface module 511 serves as a transmitter and receiver for fronthaul interface 52, capable of transmitting data from the RU through fronthaul interface 52 to the DU and receiving data from the DU through fronthaul interface 52 to the RU.

Fixed digital circuit 520 comprises beamforming and/or precoding module 521 and multiple communication signal processing modules 540a to 540n.

Each of communication signal processing modules 540a to 540n includes both transmission and reception parts. The transmission part only includes IFFT 522 and CP addition 523, while other digital circuits such as CFR, DPD, DUC, and DAC can be integrated into the RF analog circuit of the RU. The reception part only includes FFT 524 and CP removal 525, while other digital circuits such as ADC and DDC can be integrated into the RF analog circuit of the RU.

Programmable digital circuit 510 and/or fixed digital circuit 520 may also include modules for PRACH filtering processing, AGC, OFDM phase compensation, antenna calibration, and IQ data compression and decompression. To simplify the illustration in FIG 5, these modules are not depicted, but they can also be included within digital circuit 500.

As shown in FIG 5, programmable digital circuit 510 and fixed digital circuit 520 can bidirectionally transmit data through digital interface 51, while fixed digital circuit 520 can bidirectionally transmit data to the digital circuit integrated in the RF analog circuit through digital interface 50. Digital interfaces 51 and 50 can be implemented by interfaces such as JESD204 (A/B/C), LVDS, PCIe, or other interfaces.

FIG 6 illustrates a block diagram of a digital circuit for a RU according to one embodiment disclosed herein. As shown in Figure 6, digital circuit 600 comprises programmable digital circuit 610, fixed digital circuit 620, fixed digital circuits 630a to 630n, digital interfaces 60a to 60n, digital interfaces 61a to 61n, digital interface 62, and fronthaul interface 63.

Programmable digital circuit 610 includes fronthaul interface module 611, wherein fronthaul interface module 611 serves as a transmitter and receiver for fronthaul interface 63, capable of transmitting data from the RU through fronthaul interface 63 to the DU and receiving data from the DU through fronthaul interface 63 to the RU.

Fixed digital circuit 620 comprises beamforming and/or precoding module 621.

Each of fixed digital circuits 630a to 630n includes both transmission and reception parts. The transmission part comprises IFFT 631 and CP addition 632, while the reception part comprises FFT 633 and CP removal 634. Other digital circuits such as CFR, DPD, DUC, DAC, ADC, and DDC can be integrated into the RF analog circuit of the RU.

Programmable digital circuit 610 and/or fixed digital circuit 620 and/or fixed digital circuits 630a to 630n may also include modules for PRACH filtering processing, AGC, OFDM phase compensation, antenna calibration, and IQ data compression and decompression. To simplify the illustration in FIG 6, these modules are not depicted, but they can also be included within digital circuit 600.

As shown in FIG 6, programmable digital circuit 610 bidirectionally transmits data to fixed digital circuit 620 through digital interface 62; fixed digital circuit 620 bidirectionally transmits data to fixed digital circuits 630a to 630n through digital interfaces 61a to 61n; and fixed digital circuits 630a to 630n bidirectionally transmit data to the digital circuits integrated into the RF analog circuit through digital interfaces 60a to 60n. Digital interfaces 62, 61a to 61n, and 60a to 60n can be implemented by interfaces such as JESD204 (A/B/C), LVDS, PCIe, or other interfaces.

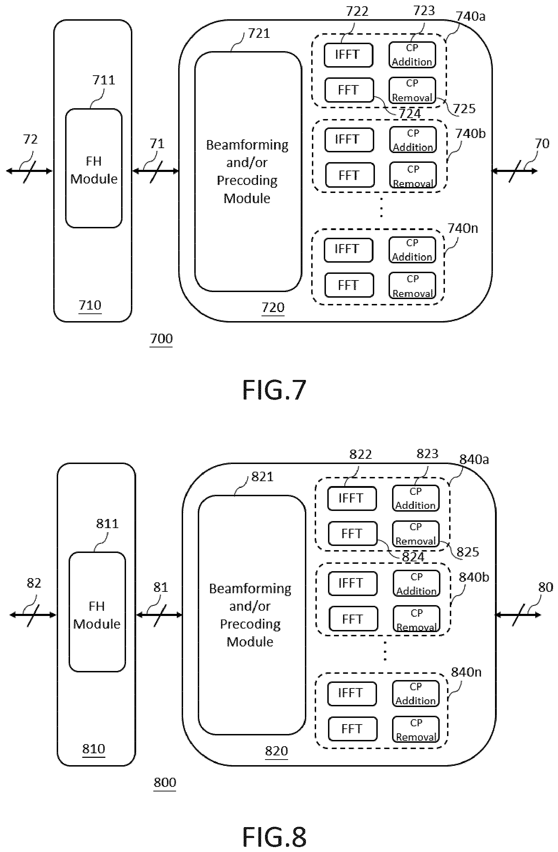

FIG 7 illustrates a block diagram of a digital circuit for a RU according to one embodiment disclosed herein. As shown in FIG 7, digital circuit 700 comprises fixed digital circuit 710, fixed digital circuit 720, digital interface 70, digital interface 71, and fronthaul interface 72.

Fixed digital circuit 710 includes fronthaul interface module 711, wherein fronthaul interface module 711 serves as a transmitter and receiver for fronthaul interface 72, capable of transmitting data from the RU through fronthaul interface 72 to the DU and receiving data from the DU through fronthaul interface 72 to the RU.

Fixed digital circuit 720 includes beamforming and/or precoding module 721 and multiple communication signal processing modules 740a to 740n.

Each of communication signal processing modules 740a to 740n includes both transmission and reception parts. The transmission part comprises IFFT 722 and CP addition 723, while the reception part comprises FFT 724 and CP removal 725. Other digital circuits such as CFR, DPD, DUC, DAC, ADC, and DDC can be integrated into the RF analog circuit of the RU.

Fixed digital circuit 710 and/or fixed digital circuit 720 may also include modules for PRACH filtering processing, AGC, OFDM phase compensation, antenna calibration, and IQ data compression and decompression. To simplify the illustration in FIG 7, these modules are not depicted, but they can also be included within digital circuit 700.

As shown in FIG 7, fixed digital circuit 710 bidirectionally transmits data to fixed digital circuit 720 through digital interface 71, while fixed digital circuit 720 bidirectionally transmits data to the digital circuits integrated into the RF analog circuit through digital interface 70. Digital interfaces 70 and 71 can be implemented by interfaces such as JESD204 (A/B/C), LVDS, PCIe, or other interfaces.

FIG 8 illustrates a block diagram of a digital circuit for a RU according to one embodiment disclosed herein. As depicted in FIG 8, digital circuit 800 comprises programmable digital circuit 810, programmable digital circuit 820, digital interface 80, digital interface 81, and fronthaul interface 82.

Programmable digital circuit 810 includes fronthaul interface module 811, where fronthaul interface module 811 acts as a transmitter and receiver for fronthaul interface 82, capable of transmitting data from the RU through fronthaul interface 82 to the DU and receiving data from the DU through fronthaul interface 82 to the RU.

Programmable digital circuit 820 includes beamforming and/or precoding module 821 and multiple communication signal processing modules 840a to 840n.

Each of communication signal processing modules 840a to 840n consists of both transmission and reception parts. The transmission part comprises IFFT 822 and CP addition 823, while the reception part comprises FFT 824 and CP removal 825. Other digital circuits such as CFR, DPD, DUC, DAC, ADC, and DDC can be integrated into the RF analog circuit of the RU.

Programmable digital circuit 810 and/or programmable digital circuit 820 may also include modules for PRACH filtering processing, AGC, OFDM phase compensation, antenna calibration, and IQ data compression and decompression. To simplify the illustration in FIG 8, these modules are not depicted, but they can also be included within the digital circuit 800.

As shown in FIG 8, programmable digital circuit 810 bidirectionally transmits data to programmable digital circuit 820 through digital interface 81, while programmable digital circuit 820 bidirectionally transmits data to the digital circuits integrated into the RF analog circuit through digital interface 80. Digital interfaces 81 and 80 can be implemented by interfaces such as JESD204 (A/B/C), LVDS, PCIe, or other interfaces.

FIG 9 illustrates a block diagram of a digital circuit for a RU according to one embodiment disclosed herein. As depicted in FIG 9, digital circuit 900 comprises programmable digital circuit 910, digital interface 90, and fronthaul interface 91. Although FIG 9 illustrates only programmable digital circuit 910, other digital circuits such as CFR, DPD, DUC, DAC, ADC, and DDC can be integrated into the RF analog circuit of the RU such that it belongs to a multi-chip architecture, within the scope of this disclosure. To simplify the illustration in FIG 9, the digital circuits integrated into the RF analog circuit are not depicted.

Programmable digital circuit 910 includes fronthaul interface module 911, beamforming and/or precoding module 912, and multiple communication signal processing modules 913a to 913n.

Fronthaul interface module 911 acts as a transmitter and receiver for fronthaul interface 91, capable of transmitting data from the RU through fronthaul interface 91 to the DU and receiving data from the DU through fronthaul interface 91 to the RU.

Each of communication signal processing modules 913a to 913n consists of both transmission and reception parts. The transmission part comprises IFFT 920 and CP addition 921, while the reception part comprises FFT 922 and CP removal 923.

Programmable digital circuit 910 may also include modules for PRACH filtering processing, AGC, OFDM phase compensation, antenna calibration, and IQ data compression and decompression. To simplify the illustration in FIG 9, these modules are not depicted, but they can also be included within digital circuit 900.

Programmable digital circuit 910 bidirectionally transmits data to the digital circuits integrated into the RF analog circuit through digital interface 90, which can be implemented by interfaces such as JESD204 (A/B/C), LVDS, PCIe, or other interfaces.

FIG 10 illustrates a block diagram of a digital circuit for a RRH according to one embodiment disclosed herein. As shown in FIG 10, digital circuit 1000 comprises programmable digital circuit 1010, fixed digital circuit 1020, analog interface 103, digital interface 101, and CPRI 102.

Programmable digital circuit 1010 includes CPRI module 1011, where CPRI module 1011 acts as a transmitter and receiver for CPRI 102, capable of transmitting data from the RRH through CPRI 102 to the BBU and receiving data from the BBU through CPRI 102 to the RRH.

Fixed digital circuit 1020 comprises DAC and ADC modules 1030a to 1030n, where each of DAC and ADC modules 1030a to 1030n comprises DAC 1021 and ADC 1022.

As depicted in Figure 10, programmable digital circuit 1010 bidirectionally transmits data to fixed digital circuit 1020 through digital interface 101, where digital interface 101 can be implemented by interfaces such as JESD204 (A/B/C), LVDS, PCIe, or other interfaces. Analog interface 103 serves as an interface for bidirectional transmission of analog signals between the RF analog circuit and fixed digital circuit 1020.

FIG 11 illustrates a block diagram of a digital circuit for a RU in a satellite communication system according to one embodiment disclosed herein. The digital circuit of the RU can be applied to systems such as ground stations and repeaters of satellites in satellite communications. As shown in Figure 11, digital circuit 1100 includes programmable digital circuit 1110, fixed digital circuits 1120a to 1120n, analog interfaces 1130a to 1130n, digital interfaces 1131a to 1131n, and fronthaul interface 1132.

Programmable digital circuit 1110 includes fronthaul interface module 1111 and beamforming module 1112. Fronthaul interface module 1111 acts as a transmitter and receiver for fronthaul interface 1132, capable of transmitting data from the RU through fronthaul interface 1132 to the DU and receiving data from the DU through fronthaul interface 1132 to the RU. Beamforming module 1112 mainly provides beamforming processing for transmission and reception.

Each of fixed digital circuits 1120a to 1120n includes transmission and reception parts. The transmission part includes DUC 1121 and DAC 1122, while the reception part includes DDC 1123 and ADC 1124. Additionally, fixed digital circuits 1120a to 1120n can also be integrated into the RF analog circuits, which is within the scope of this disclosure.

As shown in Figure 11, bidirectional data transmission is connected between programmable digital circuit 1110 and fixed digital circuits 1120a to 1120n through digital interfaces 1131a to 1131n, where digital interfaces 1131a to 1131n can be implemented by interfaces such as JESD204 (A/B/C), LVDS, PCIe, or other interfaces. Analog interfaces 1130a to 1130n serve as interfaces for bidirectional transmission of analog signals between the RF analog circuits and fixed digital circuits 1120a to 1120n.

## Claims

1. A digital circuit for a radio unit (RU), **characterized in that** the digital circuit for a radio unit (RU) comprises :
a single or plurality of programable digital circuit(s) (410), (510), (610), (810), (820), (910), (1010), (1110); and
a single or plurality of fixed digital circuit(s) (420), (520), (620), (630a)~(630n), (710), (720), (1020a)~ (1020n);
wherein at least one programable digital circuit (410), (510), (610), (810), (820), (910), (1010), (1110) or fixed digital circuit (420), (520), (620), (630a)~(630n), (710), (720), (1020a)~ (1020n) has a fronthaul interface module (411), (511), (611), (711), (811), (911), (1111), and the other programable digital circuit(s) (410), (510), (610), (810), (820), (910), (1010), (1110) and/or fixed digital circuit(s) (420), (520), (620), (630a)~(630n), (710), (720), (1020a)~ (1020n) have/has a single or plurality of communication signal processing module(s).

2. The digital circuit according to claim 1, **characterized in that** wherein the different programmable digital circuit(s) (410), (510), (610), (810), (820), (910), (1010), (1110) and fixed digital circuit(s) (420), (520), (620), (630a)~(630n), (710), (720), (1020a)~ (1020n) are connected by a single or plurality of interface(s) (41), (50), (51), (60a)~ (60n), (61a)~(61n), (62), (70), (71), (80), (81), (90), (101), (1131a)∼(1131n), and the interface (41), (50), (51), (60a)~(60n), (61a)~ (61n), (62), (70), (71), (80), (81), (90), (101), (1131a)∼(1131n) can be implemented by JESD204 A/B/C, low voltage differential signaling (LVDS), PCI Express (PCIe), or other interfaces.

3. The digital circuit according to claim 1, **characterized in that** wherein the communication signal processing module comprises at least one or a combination of the following modules: inverse fast Fourier transform (IFFT) (422), (522), (631), (722), (822), (920), cyclic prefix (CP) addition (423), (523), (632), (723), (823), (921), crest factor reduction (CFR) (424), digital pre-distortion (DPD) (425), digital up converter (DUC) (426), (1121), digital to analog converter (DAC) (427), (1021), (1122), analog to digital converter (ADC) (431), (1022), (1124), digital down converter (DDC) (430), (1123), CP removal (429), (525), (634), (725), (825), (923), fast Fourier transform (FFT) (428), (524), (633), (724), (824), (922), physical random access channel (PRACH) filtering processing, automatic gain control (AGC), in-phase and quadrature (IQ) data compression and decompression, antenna calibration, and orthogonal frequency division multiplexing (OFDM) phase compensation.

4. A digital circuit for a radio unit (RU), **characterized in that** the digital circuit for a radio unit (RU) comprises:
a plurality of programable digital circuits (410), (510), (610), (810), (820), (910), (1010), (1110),
wherein at least one programable digital circuit (410), (510), (610), (810), (820), (910), (1010), (1110) has a fronthaul interface module (411), (511), (611), (711), (811), (911), (1111), and the other programable digital circuit(s) (410), (510), (610), (810), (820), (910), (1010), (1110) has/have a single or plurality of communication signal processing module(s).

5. The digital circuit according to claim 4, **characterized in that** wherein the different programable digital circuits (410), (510), (610), (810), (820), (910), (1010), (1110) are connected by a single or plurality of interface(s) (41), (50), (51), (60a)~ (60n), (61a)~(61n), (62), (70), (71), (80), (81), (90), (101), (1131a)∼(1131n), and the interface (41), (50), (51), (60a)~ (60n), (61a)~(61n), (62), (70), (71), (80), (81), (90), (101), (1131a)∼(1131n) can be implemented by JESD204 A/B/C, LVDS, PCIe, or other interfaces.

6. The digital circuit according to claim 4, **characterized in that** wherein the communication signal processing module comprises at least one or a combination of the following modules: IFFT (422), (522), (631), (722), (822), (920), CP addition (423), (523), (632), (723), (823), (921), CFR (424), DPD (425), DUC (426), DAC (427), (1021), (1122), ADC (431), (1022), (1124), DDC (430), (1123), CP removal (429), (525), (634), (725), (825), (923), FFT (428), (524), (633), (724), (824), (922), PRACH filtering processing, AGC, IQ data compression and decompression, antenna calibration, and OFDM phase compensation.

7. A digital circuit for a radio unit (RU), **characterized in that** the digital circuit for a radio unit (RU) comprises:
a plurality of fixed digital circuits (420), (520), (620), (630a)~(630n), (710), (720), (1020a)~ (1020n);
wherein at least one fixed digital circuit (420), (520), (620), (630a)~(630n), (710), (720), (1020a)~ (1020n) has a fronthaul interface module (411), (511), (611), (711), (811), (911), (1111), and the other fixed digital circuit(s) (420), (520), (620), (630a)~(630n), (710), (720), (1020a)~ (1020n) has/have a single or plurality of communication signal processing module(s).

8. The digital circuit according to claim 7, **characterized in that** wherein the different fixed digital circuits (420), (520), (620), (630a)~(630n), (710), (720), (1020a)~ (1020n) are connected by a single or plurality of interface(s) (41), (50), (51), (60a)~ (60n), (61a)~(61n), (62), (70), (71), (80), (81), (90), (101), (1131a)∼(1131n), and the interface (41), (50), (51), (60a)~ (60n), (61a)~(61n), (62), (70), (71), (80), (81), (90), (101), (1131a)∼(1131n) can be implemented by JESD204 A/B/C, LVDS, PCIe, or other interfaces.

9. The digital circuit according to claim 7, **characterized in that** wherein the communication signal processing module comprises at least one or a combination of the following modules: IFFT (422), (522), (631), (722), (822), (920), CP addition (423), (523), (632), (723), (823), (921), CFR (424), DPD (425), DUC (426), (1121), DAC (427), (1021), (1122), ADC (431), (1022), (1124), DDC (430), (1123), CP removal (429), (525), (634), (725), (825), (923), FFT, PRACH filtering processing, AGC, IQ data compression and decompression, antenna calibration, and OFDM phase compensation.

10. A digital circuit for a remote radio head (RRH), **characterized in that** the digital circuit for a remote radio head (RRH) comprises:
a single or plurality of programable digital circuit(s) (410), (510), (610), (810), (820), (910), (1010), (1110); and
a single or plurality of fixed digital circuit(s) (420), (520), (620), (630a)~(630n), (710), (720), (1020a)~ (1020n),
wherein at least one programable digital circuit (410), (510), (610), (810), (820), (910), (1010), (1110) or fixed digital circuit (420), (520), (620), (630a)~(630n), (710), (720), (1020a)~ (1020n) has a common public radio interface (CPRI) module (1011), and the other programable digital circuit(s) (410), (510), (610), (810), (820), (910), (1010), (1110) and/or fixed digital circuit(s) (420), (520), (620), (630a)~(630n), (710), (720), (1020a)~ (1020n) have/has a single or plurality of DAC (427), (1021), (1122) and ADC (431), (1022), (1124) module(s).
